# EUROPÄISCHE PATENTSCHRIFT

(11) **EP 3 636 880 B1**
(45) Veröffentlichungstag und Bekanntmachung des Hinweises auf die Patenterteilung: **07.06.2023**
(21) Anmeldenummer: 18199842.8
(22) Anmeldetag: 11.10.2018
(51) Int. Cl.: F01D 5/04

(54) **TURBINENRAD**
TURBINE WHEEL
ROUE DE TURBINE

(43) Veröffentlichungstag der Anmeldung: 15.04.2020
(73) Patentinhaber: BorgWarner, Inc., Auburn Hills, MI 48326-2872 (US)
(72) Erfinder: Schön, Martin, 55234 Albig (DE)
(74) Vertreter: Baur & Weber Patentanwälte PartG mbB

(56) Entgegenhaltungen:
- EP-A1- 2 447 473
- DE-A1-102016 102 732
- DE-A1-102016 220 133
- DE-T5-112015 004 058
- US-A1- 2016 238 019

## Beschreibung

Die Erfindung betrifft ein Turbinenrad, insbesondere in einer Aufladevorrichtung für eine Brennkraftmaschine.

Aus dem allgemeinen Stand der Technik sind Aufladevorrichtungen in Form von Abgasturboladern bekannt, bei denen ein Turbinenrad ein Verdichterrad eines Verdichters antreibt. Turbinenrad und Verdichterrad sind auf einem gemeinsamen Rotor angeordnet, der in einem Lagergehäuse drehbar geführt ist. Das Turbinenrad wird von einem Abgasstrom angetrieben. Der Verdichter ist im Ansaugtrakt einer Brennkraftmaschine angeordnet.

Bei derartigen Aufladevorrichtungen erfolgt der Antrieb des Verdichterrads mittels des Turbinenrads, wobei die Leistungsfähigkeit der Aufladevorrichtung durch die Ausgestaltung des Turbinenrads, insbesondere bezüglich der Schaufelradgeometrie beeinflusst werden kann.

Ein Beispiel für ein Turbinenrad ist aus der EP 1 828 543 A1 bekannt. Das dort beschriebene Turbinenrad umfasst eine Nabe, mehrere Schaufeln und eine Rückplatte. Mehrere der Schaufeln umfassen einen Exducerabschnitt mit einem hinteren Rand und einen Inducerabschnitt mit einem vorderen Rand. Der Inducer weist positive lokale Schaufelwinkel entlang dem vorderen Rand bezüglich der beabsichtigten Drehrichtung des Turbinenrads auf, deren Werte von einem Punkt auf dem vorderen Rand in der Nähe eines Deckbandendes zu einem Punkt auf dem hinteren Rand in der Nähe eines Rückplattenendes zunehmen.

Aus der JP-H 11 190 201 A ist bekannt, dass Abgas eines Motors in einem Turbinengehäuse und in einem Turbinenlaufrad durch eine Schnecke strömt.

Am Auslegungspunkt stimmen ein relativer Anströmwinkel des Abgases und ein Einlassschaufelwinkel zum Laufrad überein, so dass das Abgas gleichmäßig entlang einer Laufradlamelle strömt. Abseits vom Auslegungspunkt besteht ein Unterschied zwischen dem relativen Einströmwinkel und dem Einlassschaufelwinkel. Falls eine Strömung in einer Vorderkante des Laufrads unter einem großen Anstellwinkel fließt, ist ein Wirbel, der aus einem freiliegenden Teil mit einem Rückschwenkwinkel stammt, ein schraubenartiger vertikaler Wirbel, der parallel zur Strömung verläuft, wobei eine zentrale Achse parallel zur Strömung liegt.

In der EP 2447473 A1 umfasst ein Turbinenrotor einer Turbine eine Nabe, die als Drehachse dient, und mehrere Turbinenschaufeln. Die Turbinenschaufeln weisen jeweils eine Linie auf, die sich als Deckband entlang einer Deckbandseitenkante der Turbinenschaufel vom Einlass zum Auslass erstreckt. Die Deckbandlinie umfasst eine eingangsseitige Deckbandlinie, die eine kleine Änderung vom Einlass zum Auslass in einem Schaufelwinkel in Bezug auf die Rotationsachse aufweist, eine mittlere Deckbandlinie, die sich von der Auslassseite der eingangsseitigen Deckbandlinie erstreckt und eine größere Änderung als die der eingangsseitigen Deckbandlinie aufweist, und eine ausgangsseitige Deckbandlinie, die sich von der Auslassseite der mittleren Deckbandlinie zum Auslass erstreckt und eine kleinere Änderung als die der mittleren Deckbandlinie aufweist.

Aus der US 2016/0238019 A1 ist ein Radialverdichter bekannt, der in einer Gaspipeline eingesetzt wird, und ein Radiallaufrad aufweist, das mit einer Nabe und einer Vielzahl von Schaufeln versehen ist. Die Schaufelwinkelverteilung der Schaufeln ist so konfiguriert, dass ein nabenseitiger Schaufelwinkel auf der Seite, die näher an einer nabenseitigen Vorderkante liegt als ein zentraler Punkt einer nabenseitigen Sturzlinie, maximal ist, und von diesem Teil bis zur nabenseitigen Vorderkante ist eine nabenseitige Schaufelwinkelverteilungskurve in einer den Schaufelwinkel vergrößernden Richtung konvex.

Ausgehend von diesem Stand der Technik ist es nun Aufgabe der Erfindung, ein Turbinenrad, insbesondere in einer Aufladevorrichtung für eine Brennkraftmaschine, zu schaffen, das eine weitere Verbesserung der Effizienz beim Betrieb der Aufladevorrichtung in der Brennkraftmaschine ermöglicht.

Diese Aufgabe wird durch den unabhängigen Patentanspruch gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Turbinenrad, insbesondere in einer Aufladevorrichtung für eine Brennkraftmaschine, geschaffen, wobei das Turbinenrad mehrere Schaufelblätter an einer eine Rückwand bildenden Nabe aufweist, wobei benachbarte Schaufelblätter eine Einlassfläche mit zwei Anströmkanten und eine im wesentlichen axial innen liegende Auslassfläche mit zwei Abströmkanten ausbilden, wobei eine Oberfläche eines Schaufelblatts durch mehrere zwischen der Anströmkante und der Abströmkante nebeneinander liegenden Kurven aus einem Winkel und einer Länge festlegbar ist, wobei der Winkel von der Anströmkante bei zunehmender Länge für jede der Kurven zunächst zunimmt oder konstant bleibt und anschließend abnimmt, so dass sich ein Maximum ausbildet.

Demnach wird erfindungsgemäß ein Turbinenrad angegeben, dessen Schaufelblätter bezüglich ihrer Oberfläche anhand mehrerer nebeneinander liegender Kurven festgelegt sind. Die Kurven sind dabei in einem radfesten Koordinatensystem aus Winkel und Länge beschrieben, wobei sich als charakteristisches Merkmal das Bilden eines Maximums zeigt. Die Länge folgt dabei einem Pfad zwischen Einlassfläche und Auslassfläche, so dass mittels der so geformten Schaufelblätter im Betrieb des Turbinenrades beispielsweise in einer Aufladevorrichtung einer Brennkraftmaschine eine Beschleunigung des Gasstroms erreicht werden kann, die im Vergleich zu Turbinenrädern aus dem Stand der Technik näher in Richtung Auslassfläche verschoben ist. Durch diese Geometrie der erfindungsgemäßen Turbinenräder verringert sich deren Trägheitsmoment, was eine schnellere Beschleunigung beim Hochlauf einer Brennkraftmaschine ermöglicht. Desweiteren verbessert sich dadurch der thermodynamische Wirkungsgrad des erfindungsgemäßen Turbinenrads, was insbesondere im Zusammenspiel mit weiteren Komponenten in einer Anordnung mit variabler Turbinengeometrie erreicht werden kann.

Dabei sind der Winkel als Polarwinkel und die Länge entlang einer Rotationsachse um eine Rotationsrichtung gebildet.

Nach dieser Vorgehensweise wird das radfeste Koordinatensystem auf fachübliche Weise aus Polarwinkel und Länge entlang einer Rotationsachse um eine Rotationsrichtung des Turbinenrads gebildet. Eine derartige Darstellung ist auf dem Gebiet der Turbinenräder üblich, so dass auch ein einfacher Vergleich mit Turbinenrädern aus dem Stand der Technik möglich ist.

Ein Nullpunkt des Winkels ist entlang der Anströmkante in Richtung der Rotationsrichtung zunehmend gewählt. Außerdem ist die Länge entlang der Rotationsachse normiert.

Auch hierbei handelt es sich um eine fachübliche Maßnahme, so dass insbesondere bei unterschiedlich geformten Schaufelblättern ein Vergleich bezüglich charakteristischer Merkmale möglich ist, wobei beispielsweise unabhängig vom tatsächlichen Startpunkt einer Kurve der zugehörige Winkel immer am Nullpunkt beginnt. Da die Wegstrecke zwischen Einlassfläche und Auslassfläche entlang der Kurven typischerweise unterschiedlich lang ist, bietet sich eine Normierung der Länge an. Aus dem Winkel kann auch in einer alternativen Darstellung ein zugehöriger Metallwinkel berechnet werden, der als Differential aus dem oben definierten Winkel und einer meridionalen Trajektorie berechnet wird.

Gemäß einer Ausführungsform der Erfindung sind mehrere Kurven ausgehend vom Übergang zwischen Schaufelblatt und Nabe bis zu einem Außenrand des Schaufelblatts gebildet. Die mehreren Kurven können dabei äquidistant beabstandet gewählt sein. Desweiteren können die mehreren Kurven mittig in das Schaufelblatt gelegt werden.

Zur Festlegung der Oberfläche eines Schaufelblattes wird demnach eine Kurvenschar aus mehreren Kurven gebildet, die jeweils auf einer Anströmkante beginnen und bis zur Abströmkante geführt sind. Zwischen Anströmkante und Abströmkante befindet sich der für die thermodynamischen Eigenschaften des Turbinenrads relevante Bereich, so dass eine Charakterisierung der Oberfläche eines Schaufelblattes zwischen diesen Punkten ausreichend ist. Durch ein äquidistantes Beabstanden können die einzelnen Kurven beispielsweise bei Werten von 0 %, 25 %, 50 %, 75 % und 100 % der Länge der Abströmkante als Startpunkte beginnen und an entsprechenden Punkten der Abströmkanten enden. Die bei 0 % der Anströmkante liegende Kurve wird dabei oftmals als Nabenschnitt bezeichnet, während die bei 100 % der Anströmkante beginnende Kurve als Außenschnitt bezeichnet werden kann. Die Kurven werden dabei in die Schaufelmitte zwischen die Saug- und die Druckseite gelegt.

Gemäß einer weiteren Ausführungsform der Erfindung nimmt am Übergang zwischen Schaufelblatt und Nabe der Winkel der zugehörigen Kurve zunächst zu, weist im Bereich von 40 % bis 50 % der Länge das Maximum auf und nimmt anschließend ab.

Bei dieser Ausführungsform wird der sogenannte Nabenschnitt näher charakterisiert, wobei hier ein Merkmal der erfindungsgemäßen Ausgestaltung darin besteht, dass das Maximum der zugehörigen Kurve bezüglich des Winkels ein Maximum im Bereich von 40 bis 50 % der Länge zwischen Einlassfläche und Auslassfläche aufweist. Typischerweise weisen Turbinenräder nach dem Stand der Technik kein Maximum auf bzw. nehmen über den ganzen Bereich der Länge bezüglich des Winkels kontinuierlich ab.

Gemäß einer weiteren Ausführungsform der Erfindung weisen die Winkel der zwischen der Kurve am Übergang und der Kurve am Außenrand liegenden Kurven im Vergleich zum Maximum weniger ausgeprägte Maxima aufweisen. Dabei können die Winkel der zugehörigen Kurven das jeweilige Maximum im Bereich von 20 % bis 40 % der Länge aufweisen. Die Maxima können in Richtung des Außenrands für benachbarte Kurven in ein Plateau übergehen.

Diese Ausgestaltung bezieht sich auf die zugehörigen Kurven zwischen dem Nabenschnitt und dem Außenschnitt, d. h. diejenigen Kurven, die sich beispielsweise im Bereich von 25 bis 75 % der Länge der Anström- bzw. Abströmkante als Start- bzw. Endpunkt befinden. Im Vergleich zur Kurve des Nabenschnitts ist hier zwar ebenfalls ein Maximum ausgebildet, dieses fällt jedoch deutlich weniger ausgeprägt aus, d. h. der maximale Winkel vom Maximum weist einen geringeren Wert auf. Darüber hinaus ist das Maximum auch zu kleineren Werten der Länge hin verschoben bzw. geht bei weiter außen liegenden Kurven, beispielsweise bei der Kurve bei 75 % der Anströmkante als Startpunkt allmählich in ein Plateau über.

In einer anderen Variante können die Winkel der zwischen der Kurve am Übergang und der Kurve am Außenrand liegenden Kurven jeweils ein Maximum in Form eines Plateaus aufweisen.

Anstelle der soeben beschriebenen Ausgestaltung mit einem Maximum können auch die Kurven zwischen Nabenschnitt und Außenschnitt ohne erkennbaren Extremwert ausgebildet sein, so dass das Maximum jeweils die Form eines Plateaus aufweist.

Gemäß einer weiteren Ausführungsform der Erfindung bleibt entlang des Außenrands des Schaufelblatts der Winkel der zugehörigen Kurve im Bereich bis 20 % der Länge konstant oder nahezu konstant und nimmt anschließend ab so dass das zugehörige Maximum in Form eines Plateaus ausgebildet ist.

In dieser Ausführungsform wird der sogenannte Außenschnitt, d. h. die Kurve im Bereich des Außenrands des Schaufelblatts näher beschrieben. Hier findet typischerweise keine Ausgestaltung mit einem Extremwert statt, sondern das Maximum ist ungefähr bis zu einer Länge von 20 % als Plateau ausgebildet und fällt anschließend ab.

Dabei kann entlang des Außenrands des Schaufelblatts der Winkel der zugehörigen Kurve im Bereich unter 5 % der Länge das Maximum aufweisen.

In anderen Varianten ist jedoch eine Ausgestaltung denkbar, bei der entlang des Außenrads der Winkel bei sehr kleinen Längen, typischerweise bei einigen Prozent der Länge der Kurve ein Extremwert aufweist, der das Maximum des Winkels bildet. Typischerweise wird dieses Maximum jedoch nur einige Grad betragen.

Gemäß der Erfindung wird auch eine Aufladevorrichtung mit variabler Turbinengeometrie für eine Brennkraftmaschine geschaffen, die in einem Lagergehäuse auf einer Welle ein Verdichterrad und ein das Verdichterrad antreibendes Turbinenrad in einer Anordnung mit variabler Turbinengeometrie aufweist, wobei das Turbinenrad mehrere Schaufelblätter an einer eine Rückwand bildenden Nabe aufweist, wobei benachbarte Schaufelblätter eine Einlassfläche mit zwei Anströmkanten und eine im wesentlichen axial innen liegende Auslassfläche mit zwei Abströmkanten ausbilden, wobei eine Oberfläche eines Schaufelblatts durch mehrere zwischen der Anströmkante und der Abströmkante nebeneinander liegenden Kurven aus einem Winkel und einer Länge festlegbar ist, wobei der Winkel von der Anströmkante bei zunehmender Länge für jede der Kurven zunächst zunimmt oder konstant bleibt und anschließend abnimmt, so dass sich ein Maximum ausbildet..

Die charakteristische Ausgestaltung des Turbinenrades ermöglicht es, die Beschleunigung der Gase in einer Aufladevorrichtung beim Durchströmen des Turbinenrads relativ spät zu beschleunigen, so dass eine Effizienzsteigerung der Aufladevorrichtung aufgrund des reduzierten Trägheitsmoments des Turbinenrads und aufgrund der des verbesserten thermodynamischen Wirkungsgrads möglich ist.

Nachfolgend werden einige Ausführungsbeispiele anhand der Zeichnungen näher erläutert. Es zeigen:
- Fig. 1: schematisch eine Aufladevorrichtung für eine Brennkraftmaschine in einer teilweisen Schnittdarstellung,
- Fig. 2: ein Turbinenrad gemäß einer Ausführungsform der Erfindung in einer perspektivischen Seitenansicht,
- Fig. 3: das Turbinenrad aus Fig. 2 in einer Draufsicht zusammen mit einem Koordinatensystem,
- Fig. 4: das Turbinenrad aus Fig. 2 in einer Seitenansicht zusammen mit einem Turbinenrad nach dem Stand der Technik,
- Fig. 5A - E: jeweils ein Diagramm zur Beschreibung eines erfindungsgemäßen Turbinenrads.

In den Figuren sind gleiche oder funktional gleich wirkende Bauteile mit den gleichen Bezugszeichen versehen.

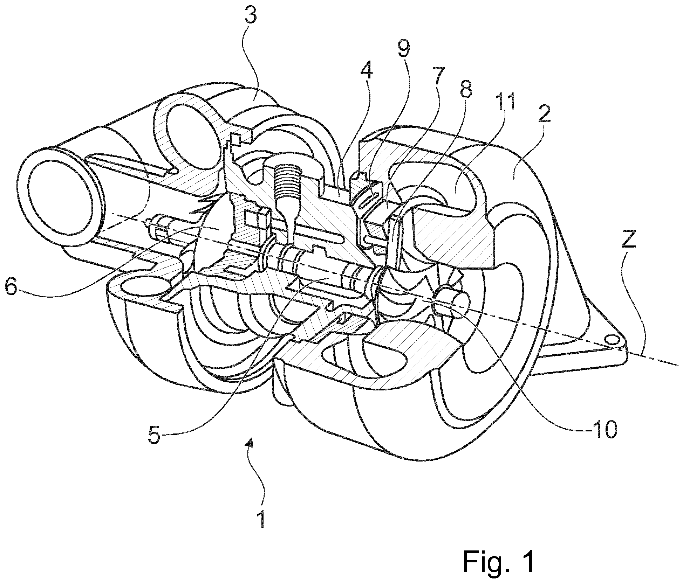

Im Folgenden wird anhand der Fig. 1 zunächst schematisch eine Aufladevorrichtung 1 beschrieben, in welche eine erfindungsgemäße Ausgestaltung eines Turbinenrads bevorzugt eingesetzt werden kann. Fig. 1 zeigt dabei in einer Schnittansicht die Aufladevorrichtung 1 lediglich grob skizziert, um die Lage der einzelnen Bauteile darstellen zu können. An sich sind derartige Aufladevorrichtungen 1 aus dem Stand der Technik bekannt.

Fig. 1 zeigt eine teilweise im Schnitt dargestellte Perspektivansicht einer erfindungsgemäßen Aufladevorrichtung 1. Die Aufladevorrichtung 1 weist ein Turbinengehäuse 2 und ein damit über ein Lagergehäuse 4 verbundenes Verdichtergehäuse 3 auf. Turbinengehäuse 2, Verdichtergehäuse 3 und Lagergehäuse 4 sind entlang einer Achse Z angeordnet. Das Turbinengehäuse 2 ist teilweise im Schnitt gezeigt, Dabei verbindet die Welle 5 ein Turbinenrad 10 mit einem Verdichterrad 6. Auf der Turbinenseite ist mittels eines Schaufellagerrings 7 eine variable Turbinengeometrie angeordnet, die eine Mehrzahl von über den Umfang verteilten Verstellschaufeln 8 mit entsprechenden Drehachsen aufweist. Hierdurch werden Düsenquerschnitte gebildet, die je nach der Lage der Verstellschaufeln 8 größer oder kleiner sind und das in der Mitte an der Achse Z gelegene Turbinenrad 10 mehr oder weniger mit dem über einen Zuführkanal 11 zugeführten und über einen Zentralstutzen abgeführten Abgas eines Motors beaufschlagen, um über das Turbinenrad 10 das Verdichterrad 6 anzutreiben. Um die Bewegung bzw. die Lage der Verstellschaufeln 8 zu steuern, ist eine Betätigungseinrichtung bzw. ein Aktuator vorgesehen, der beispielsweise als Elektrosteller oder pneumatische Steuerdose ausgebildet sein kann. Die Betätigungseinrichtung eine hinter dem Schaufellagerring 7 gelegenen Verstellring 9 in eine leichte Drehbewegung versetzen.

Es versteht sich von selbst, dass im allgemeinen Aufladevorrichtungen 1, wie sie in Fig. 1 schematisch dargestellt sind, noch weitere Bauteile umfassen werden, um in einer Brennkraftmaschine eingesetzt werden zu können. Eine derartige Aufladevorrichtung 1 wird auch als VTG-Lader bezeichnet. Im Folgenden wird nun die erfindungsgemäße Ausgestaltung des Turbinenrads 10 näher beschrieben, das in der Aufladevorrichtung 1 eingesetzt werden kann.

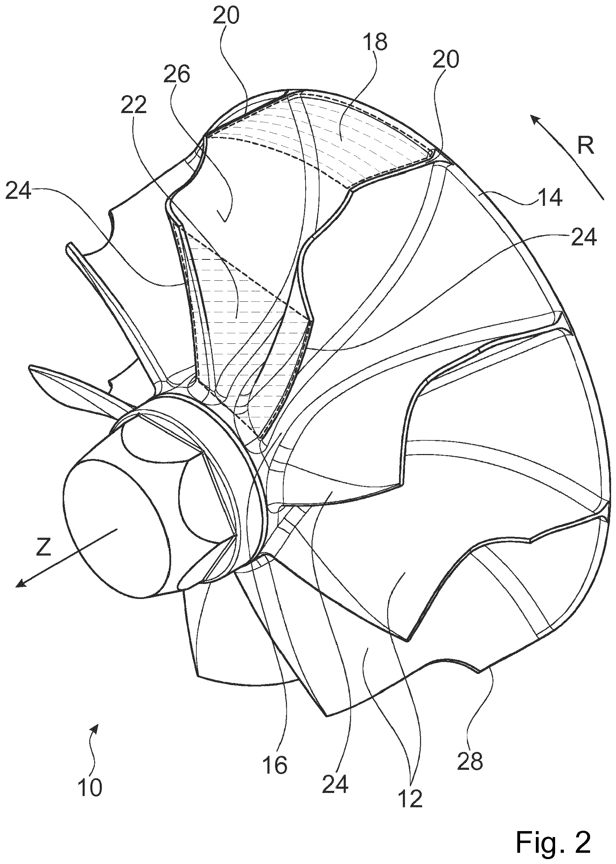

In Fig. 2 ist in einer perspektivischen Seitenansicht das Turbinenrad 10 dargestellt. Man erkennt, dass das Turbinenrad 10 vorzugsweise äquidistant beabstandete Schaufelblätter 12 aufweist, die an einer eine Rückwand 14 bildenden Nabe 16 angeordnet sind. Zwischen benachbarten Schaufelblättern 12 ist eine Einlassfläche 18 gebildet, die von zwei Anströmkanten 20 begrenzt wird. Die Einlassfläche 18 ist dabei umfangseitig radial außen liegend angeordnet. Desweiteren ist eine im Wesentlichen axial innen liegende Auslassfläche 22 vorgesehen, die zwischen zwei Abströmkanten 24 benachbarter Schaufelblätter 12 gebildet wird.

Bei dem Turbinenrad 10 strömt somit Gas von der Einlassfläche 18 zur Auslassfläche 22, wobei Oberflächen 26 der Schaufelblätter 12 so gewählt sind, dass das Gas zwischen der Einlassfläche 18 und der Auslassfläche 22 eine Beschleunigung erfahren kann, so dass das Turbinenrad 10 in eine Drehbewegung versetzt wird, die in Fig. 2 mit der Rotationsrichtung R bezeichnet wird. Der Bereich eines Schaufelblatts 12, der von der Rückwand 14 über die Anströmkante 20 und der Abströmkante 24 in Richtung des Endes der Nabe 16 definiert wird, ist in den nachfolgenden Beispielen als Außenrand 28 bezeichnet.

Erfindungsgemäß ist nun die Ausgestaltung der Oberfläche 26 des Schaufelblatts 12 so gewählt, dass sich im Vergleich zu Turbinenrädern aus dem Stand der Technik eine weitere Verbesserung in Bezug auf Massenträgheit und thermodynamischen Wirkungsgrad einstellt. Die Erläuterung der erfindungsgemäßen Ausgestaltung kann dabei auf unterschiedliche Weise erfolgen. Zum einen könnte versucht werden, einen meridionalen Verlauf zwischen Einlassfläche 18 und Auslassfläche 22 bezüglich der thermodynamisch aktiven Fläche darzustellen, um die Beschleunigung des Gases beschreiben zu können. Da sich je nach vorliegenden Druckverhältnissen bzw. Drehzahlen jedoch andere thermodynamische Verhältnisse einstellen würden, kann die vorteilhafte Wirkung der erfindungsgemäßen Ausgestaltung des Turbinenrads 10 nur schwierig vorgenommen werden.

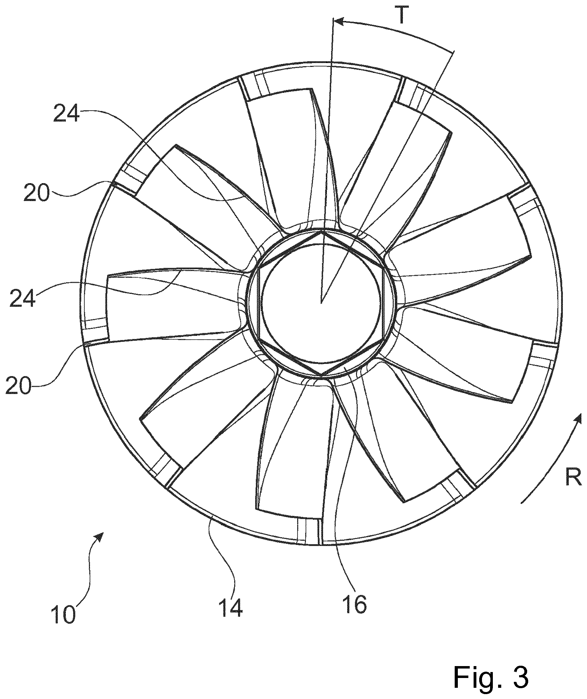

Nachfolgend wird deshalb unter Bezugnahme auf Fig. 3 ein anderer Weg gewählt. Das Turbinenrad 10 wird mit einem ortsfesten Koordinatensystem verbunden, wobei hier eine Darstellung ähnlich einem Polarkoordinatensystem gewählt wird. Ein Winkel T (Theta) wird dabei in Richtung der Rotationsrichtung R größer werdend gewählt, wobei zur Beschreibung der Kontur verschiedene Startwerte entlang der Anströmkante 20 gewählt werden. An jedem dieser Startpunkte entlang der Anströmkante 20 wird der Winkel T jeweils auf Null gesetzt. Aus dem Winkel T wird in manchen Anwendungsfällen auch ein Metallwinkel abgeleitet, so dass ein Zusammenhang mit der Oberflächenkontur eines Schaufelblatts 12 unabhängig von den tatsächlich vorliegenden thermodynamischen Verhältnissen bestimmt werden kann.

Der Vollständigkeit halber sei noch erwähnt, dass die Kontur des Schaufelblatts 12 nicht exakt auf der Oberfläche 26 angegeben wird. Es hat sich als zweckmäßig herausgestellt, die Schaufelmitte als Bezugsebene zu wählen. Die Schaufelmitte kann auch als Mitte der Saug- und Druckseite bezeichnet werden.

Die Konturlinien entlang des Schaufelblatts 12 in Richtung der Rotationsachse werden nachfolgend als Z-Richtung bezeichnet, wobei diese jeweils normiert werden, da sich je nach gewähltem Startpunkt auf der Anströmkante 20 bzw.

Endpunkt auf der Abströmkante 24 unterschiedliche Längen der Konturlinien ergeben. Es sei erwähnt, dass eine derartige Darstellung auf dem Gebiet der Turbinenräder geläufig ist, wobei die eingangs zitierte US-Schrift eine ähnliche Vorgehensweise wählt.

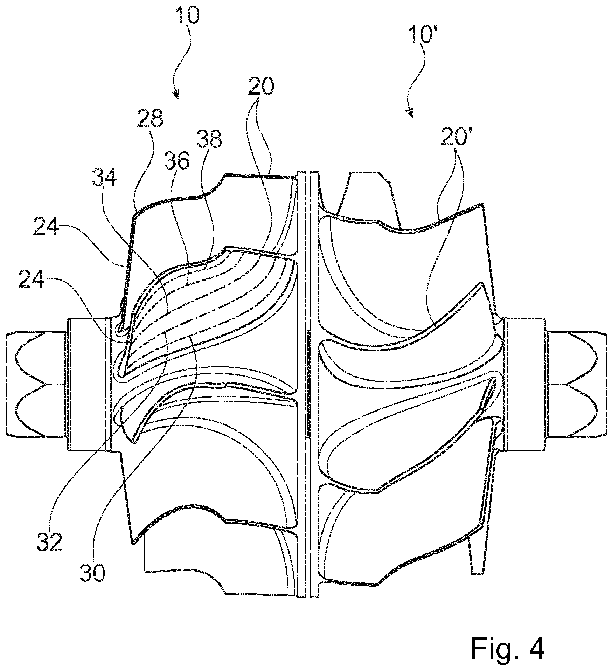

In Fig. 4 ist nun das Turbinenrad 10 in einer Seitenansicht gezeigt, wobei unterschiedliche Konturlinien hier als Kurven 30, 32, 34, 36 und 38 eingezeichnet sind. Die erste Kurve 30 ist dabei am Übergang zwischen Schaufelblatt 12 und Nabe 16 ausgewählt. Die weiteren Kurven 32, 34 und 36 sind dabei äquidistant beabstandet mit jeweils weiter innen liegenden Start- bzw. Endpunkten entlang der Anströmkante 20 bzw. der Abströmkante 24 gewählt. Die fünfte Kurve 38 folgt dabei dem Außenrand 28 des Schaufelblatts 12. Mit der gezeigten Schar von Kurven 30, 32, 34, 36 und 38 ist es somit möglich, die Kontur eines Schaufelblatts 12 zu beschreiben. Es sei an dieser Stelle nochmals erwähnt, dass die gezeigten Kurven 30 bis 38 üblicherweise in der Schaufelmitte angegeben werden.

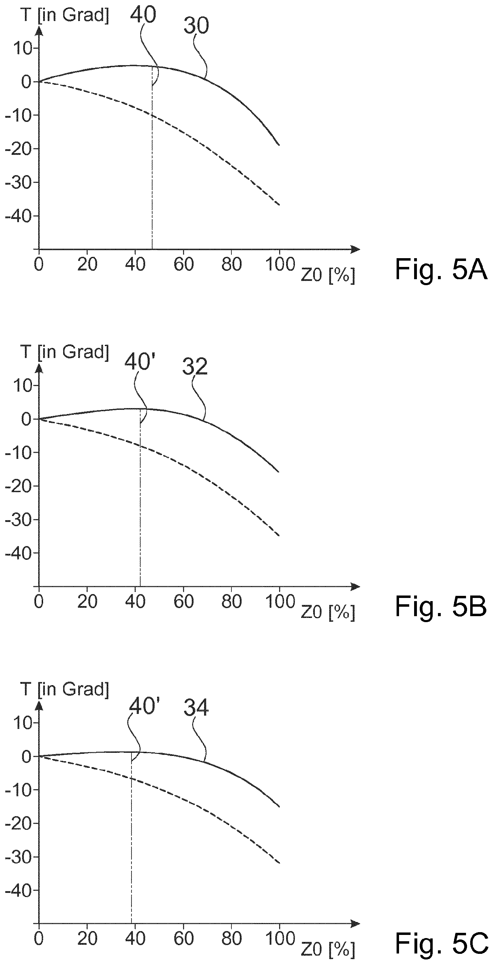

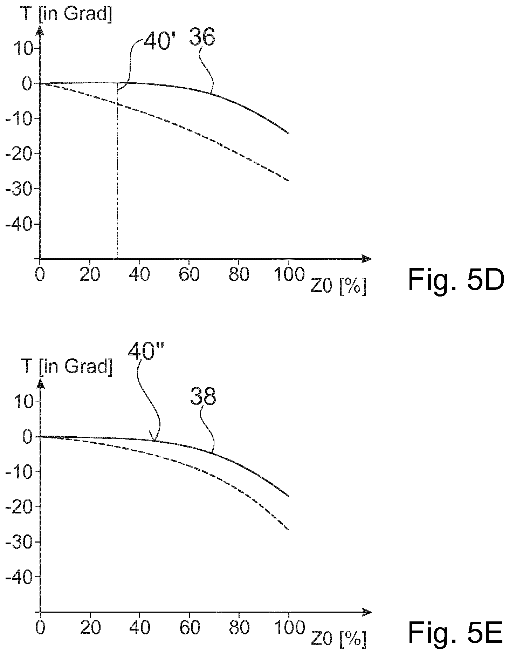

Für jede der oben beschriebenen Kurven 30 bis 38 ist nun in den Fig. 5A bis 5E der Verlauf des Winkels T über die normierte z-Richtung Z0 als Kurve eingezeichnet. Die gestrichelt eingezeichneten Kurven entsprechen dabei einer Oberflächenkontur wie sie mit einem Turbinenrad aus dem Stand der Technik erzielt werden würden. Die Bestimmung der Parameter des Winkels T entlang der Richtung Z0 erfolgt dabei auf identische Weise, wobei zum Vergleich der Schaufelblattgeometrien in Fig. 4 ein weiteres Turbinenrad 10' eingezeichnet ist, das unmittelbar benachbart Rückwand an Rückwand mit einem erfindungsgemäßen Turbinenrad 10 zum Vergleich dargestellt ist. Das Vergleichsbeispiel würde bezüglich der oben beschriebenen Kurven kein Maximum aufweisen und folgt daher einem Verlauf, wie in den Fig. 5A bis 5E anhand der gestrichelt eingezeichneten Kurven verdeutlicht ist. Die Anströmkante 20' ist bei dem weiteren Turbinenrad 10' nach Fig. 4 erkennbar abweichend geformt.

Im Bereich des Übergangs zwischen Schaufelblatt 12 und Nabe 16 nimmt der Winkel T von der Anströmkante 20 bei zunehmender Länge Z0 für die Kurve 30 zunächst zu, so dass sich ein Maximum 40 ausbildet, wie in Fig. 5A gezeigt ist. Anschließend nimmt der Wert für den Winkel T bei zunehmender Länge Z0 wieder ab.

Für die weiter vom Übergang zwischen Schaufelblatt 12 und Nabe 16 beabstandeten Kurven 32, 34 und 36 bildet sich gemäß der Darstellung nach Fig. 5B bis 5D ebenfalls ein Maximum 40' aus, wobei dieses Maximum für weiter in Richtung Außenrand 28 liegende Kurven weniger ausgeprägt ist bzw. zu kleineren Werten der Länge Z0 verschoben ist.

Für die letzte Kurve 38, die in Fig. 5E dargestellt ist, bildet sich lediglich eine Art Plateau 40" aus, so dass der Winkel T bei zunehmender Länge Z0 demnach zunächst konstant bleibt und dann abnimmt. Unter dem Begriff "Plateau" wird in dieser Beschreibung nicht nur ein exakt horizontaler Verlauf des Winkels T verstanden, da durchaus auch Abweichungen bis zu einigen Grad im Winkel T auftreten können.

Das Maximum 40 für die erste Kurve 30 liegt dabei in einem Bereich von 40 bis 50 % der Länge Z0 ausgebildet. Die Maxima 40' der Kurven 32, 34 und 36 liegen typischerweise in einem Bereich von 20 % bis 40 % der Länge Z0. In anderen Ausgestaltungen kann aber auch bereits für die Kurve 36 oder die Kurve 34 und die Kurve 36 sowie für alle Kurven 32, 34 und 36 ein Verlauf mit einem Plateau vorliegen, wie dies gemäß Fig. 5E für die Kurve 38 gezeigt ist.

Die erfindungsgemäßen Ausgestaltung der Schaufelblätter 12 ermöglicht eine reduzierte Massenträgheit des Turbinenrads 10, da dessen Form durch den relativ spät bezüglich der meridionalen Trajektorie beschleunigten Gasstrom bedingt wird. Ein Einsatz des erfindungsgemäßen Turbinenrads 10 in der Aufladevorrichtung 1 verringert dessen Trägheitsmoment, wodurch eine schnellere Beschleunigung beim Hochlauf einer Brennkraftmaschine erzielt werden kann. Dadurch verbessert sich auch der thermodynamische Wirkungsgrad des erfindungsgemäßen Turbinenrads 10 in der Aufladevorrichtung 1, was insbesondere im Zusammenspiel mit weiteren Komponenten in einer Anordnung mit variabler Turbinengeometrie erreicht werden kann.

### Liste der Bezugszeichen:

- 1: Aufladevorrichtung
- 2: Turbinengehäuse
- 3: Verdichtergehäuse
- 4: Lagergehäuse
- 5: Welle
- 6: Verdichterrad
- 7: Schaufellagerring
- 8: Verstellschaufeln
- 9: Verstellring
- 10, 10': Turbinenrad
- 11: Zuführkanal
- 12: Schaufelblatt
- 14: Rückwand
- 16: Nabe
- 18: Einlassfläche
- 20, 20': Anströmkante
- 22: Auslassfläche
- 24: Abströmkante
- 26: Oberfläche
- 28: Außenrand
- 30- 38: Kurve
- 40: Maximum
- 40': Maximum
- 40": Maximum

## Patentansprüche

1. Turbinenrad, insbesondere in einer Aufladevorrichtung für eine Brennkraftmaschine, wobei das Turbinenrad (10) mehrere Schaufelblätter (12) an einer eine Rückwand (14) bildenden Nabe (16) aufweist, wobei benachbarte Schaufelblätter (12) eine umfangsseitig radial außen liegend angeordnete Einlassfläche (18) mit zwei Anströmkanten (20) und eine im wesentlichen axial innen liegende Auslassfläche (22) mit zwei Abströmkanten (24) ausbilden, wobei eine Oberfläche (26) eines Schaufelblatts (12) durch mehrere zwischen der Anströmkante (20) und der Abströmkante (24) nebeneinander liegenden Kurven (30,..., 38) aus einem Winkel (T) und einer Länge (Z0) bestimmbar ist, **dadurch gekennzeichnet, dass** der Winkel (T) von der Anströmkante (20) bei zunehmender Länge (Z0) für jede der Kurven (30,..., 38) zunächst zunimmt oder konstant bleibt und anschließend abnimmt, so dass sich ein Maximum (40, 40', 40") ausbildet, wobei der Winkel (T) als Polarwinkel und die Länge entlang einer Rotationsachse (Z) um eine Rotationsrichtung (R) gebildet sind, ein Nullpunkt des Winkels (T) entlang der Anströmkante (20) in Richtung der Rotationsrichtung (R) zunehmend gewählt ist, und die Länge (Z0) entlang der Rotationsachse (Z) normiert ist.

2. Turbinenrad nach einem der Anspruch 1, bei dem mehrere Kurven (30,..., 38) ausgehend vom Übergang zwischen Schaufelblatt (12) und Nabe (16) bis zu einem Außenrand (28) des Schaufelblatts (12) gebildet sind.

3. Turbinenrad nach Anspruch 2, bei dem die mehreren Kurven (30,...,38) äquidistant beabstandet gewählt sind.

4. Turbinenrad nach Anspruch 2 oder 3, bei dem die mehreren Kurven (30,..., 38) mittig im Schaufelblatt (12) gewählt sind.

5. Turbinenrad nach einem der Ansprüche 2 bis 4, bei dem am Übergang zwischen dem Schaufelblatt (12) und der Nabe (16) der Winkel (T) der zugehörigen Kurve (30) zunächst zunimmt, im Bereich von 40 % bis 50 % der Länge (Z0) das Maximum (40) aufweist und anschließend abnimmt.

6. Turbinenrad nach einem der Ansprüche 1 bis 5, bei dem die Winkel (T) der zwischen der Kurve (30) am Übergang und der Kurve (38) am Außenrand (28) liegenden Kurven (32, 34, 36) im Vergleich zum Maximum (40) weniger ausgeprägte Maxima (40') aufweisen.

7. Turbinenrad nach Anspruch 6, bei dem die Winkel (T) der zugehörigen Kurven (32, 34, 36) das jeweilige Maximum (40') im Bereich von 20 % bis 40 % der Länge (Z0) aufweisen.

8. Turbinenrad nach Anspruch 6 oder 7, bei dem die Maxima (40') in Richtung des Außenrands (28) für benachbarte Kurven (32, 34, 36) in ein Plateau übergehen.

9. Turbinenrad nach einem der Ansprüche 1 bis 5, bei dem die Winkel (T) der zwischen der Kurve (30) am Übergang und der Kurve (38) am Außenrand (28) liegenden Kurven (32, 34, 36) jeweils ein Maximum in Form eines Plateaus aufweisen.

10. Turbinenrad nach einem der Ansprüche 2 bis 9, bei dem entlang des Außenrands (28) des Schaufelblatts (12) der Winkel (T) der zugehörigen Kurve (38) im Bereich bis 20 % der Länge (Z0) konstant oder nahezu konstant bleibt und anschließend abnimmt, so dass das Maximum (40") in Form eines Plateaus ausgebildet ist.

11. Turbinenrad nach einem der Ansprüche 2 bis 9, bei dem entlang des Außenrands (28) des Schaufelblatts (12) der Winkel (T) der zugehörigen Kurve (38) im Bereich unter 5 % der Länge (Z0) das Maximum (40") aufweist.

12. Aufladevorrichtung mit variabler Turbinengeometrie für eine Brennkraftmaschine, die ein Turbinenrad (10) nach einem der Ansprüche 1 bis 11 aufweist.

## Claims

1. Turbine wheel, in particular in a supercharging device for an internal combustion engine, the turbine wheel (10) having a plurality of blades (12) on a hub (16) forming a rear wall (14), adjacent blades (12) forming an inlet surface (18) arranged circumferentially radially on the outside and having two leading edges (20) and an outlet surface (22) arranged substantially axially on the inside and having two trailing edges (24), a surface (26) of a blade (12) being formed by a plurality of curves (30, ...) lying next to one another between the leading edge (20) and the trailing edge (24)..., 38) lying next to one another between the leading edge (20) and the trailing edge (24), from an angle (T) and a length (Z0), **characterized in that** the angle (T) from the leading edge (20) initially increases or remains constant as the length (Z0) increases for each of the curves (30,...., 38) initially increases or remains constant and then decreases so that a maximum (40, 40', 40") is formed, the angle (T) being formed as a polar angle and the length being formed along an axis of rotation (Z) about a direction of rotation (R), a zero point of the angle (T) along the leading edge (20) is selected to increase in the direction of the direction of rotation (R), and the length (Z0) is normalised along the axis of rotation (Z).

2. The turbine wheel of any one of claims 1, wherein a plurality of curves (30,... , 38) are formed starting from the transition between the blade (12) and the hub (16) to an outer edge (28) of the blade (12).

3. The turbine wheel of claim 2, wherein the plurality of curves (30,... ,38) are selected to be equidistantly spaced.

4. A turbine wheel according to claim 2 or 3, wherein the plurality of curves (30,... , 38) are selected centrally in the blade (12).

5. Turbine wheel according to any one of claims 2 to 4, in which, at the transition between the blade (12) and the hub (16), the angle (T) of the associated curve (30) initially increases, has the maximum (40) in the range from 40% to 50% of the length (Z0) and subsequently decreases.

6. Turbine wheel according to any one of claims 1 to 5, in which the angles (T) of the curves (32, 34, 36) lying between the curve (30) at the transition and the curve (38) at the outer edge (28) have less pronounced maxima (40') compared with the maximum (40).

7. Turbine wheel according to claim 6, in which the angles (T) of the associated curves (32, 34, 36) have the respective maximum (40') in the range from 20% to 40% of the length (Z0).

8. Turbine wheel according to claim 6 or 7, in which the maxima (40') in the direction of the outer rim (28) for adjacent curves (32, 34, 36) merge into a plateau.

9. Turbine wheel according to any one of claims 1 to 5, in which the angles (T) of the curves (32, 34, 36) lying between the curve (30) at the transition and the curve (38) at the outer edge (28) each have a maximum in the form of a plateau.

10. Turbine wheel according to any one of claims 2 to 9, in which along the outer edge (28) of the blade (12) the angle (T) of the associated curve (38) remains constant or virtually constant in the range up to 20% of the length (Z0) and then decreases, so that the maximum (40") is in the form of a plateau.

11. Turbine wheel according to any one of claims 2 to 9, wherein along the outer edge (28) of the blade (12) the angle (T) of the associated curve (38) has the maximum (40") in the range below 5% of the length (Z0).

12. A variable turbine geometry supercharger for an internal combustion engine comprising a turbine wheel (10) according to any one of claims 1 to 11.

## Revendications

1. Roue de turbine, en particulier dans un dispositif de suralimentation pour un moteur à combustion interne, la roue de turbine (10) présentant plusieurs pales d'aubes (12) sur un moyeu (16) formant une paroi arrière (14), des pales d'aubes (12) voisines formant une surface d'entrée (18) disposée radialement à l'extérieur sur la périphérie avec deux bords d'attaque (20) et une surface de sortie (22) disposée sensiblement axialement à l'intérieur avec deux bords de fuite (24), une surface (26) d'une pale d'aubes (12) étant formée par plusieurs courbes (30,.....38) à partir d'un angle (T) et d'une longueur (Z0), **caractérisé en ce que** l'angle (T) à partir du bord d'attaque (20) peut être déterminé pour chacune des courbes (30,...38) augmente tout d'abord ou reste constante et diminue ensuite, de sorte qu'un maximum (40, 40', 40") se forme, l'angle (T) étant formé comme angle polaire et la longueur le long d'un axe de rotation (Z) autour d'une direction de rotation (R), un point zéro de l'angle (T) le long du bord d'attaque (20) étant choisi croissant dans la direction de la direction de rotation (R), et la longueur (Z0) étant normalisée le long de l'axe de rotation (Z).

2. Roue de turbine selon l'une des revendications 1, dans laquelle plusieurs courbes (30, ..., 38) sont formées en partant de la transition entre la pale (12) et le moyeu (16) jusqu'à un bord extérieur (28) de la pale (12).

3. Roue de turbine selon la revendication 2, dans laquelle la pluralité de courbes (30, ..., 38) sont choisies équidistantes les unes des autres.

4. Roue de turbine selon la revendication 2 ou 3, dans laquelle la pluralité de courbes (30, ..., 38) est choisie au centre de la pale (12).

5. Roue de turbine selon l'une des revendications 2 à 4, dans laquelle, à la transition entre la pale (12) et le moyeu (16), l'angle (T) de la courbe (30) associée augmente d'abord, présente le maximum (40) dans la plage de 40 % à 50 % de la longueur (Z0), puis diminue.

6. Roue de turbine selon l'une des revendications 1 à 5, dans laquelle les angles (T) des courbes (32, 34, 36) situées entre la courbe (30) au niveau de la transition et la courbe (38) au niveau du bord extérieur (28) présentent des maxima (40') moins marqués par rapport au maximum (40).

7. Roue de turbine selon la revendication 6, dans laquelle les angles (T) des courbes associées (32, 34, 36) présentent le maximum respectif (40') dans la plage de 20 % à 40 % de la longueur (Z0).

8. Roue de turbine selon la revendication 6 ou 7, dans laquelle les maxima (40') en direction du bord extérieur (28) pour des courbes voisines (32, 34, 36) se transforment en un plateau.

9. Roue de turbine selon l'une des revendications 1 à 5, dans laquelle les angles (T) des courbes (32, 34, 36) situées entre la courbe (30) au niveau de la transition et la courbe (38) au niveau du bord extérieur (28) présentent chacun un maximum sous la forme d'un plateau.

10. Roue de turbine selon l'une quelconque des revendications 2 à 9, dans laquelle, le long du bord extérieur (28) de la pale (12), l'angle (T) de la courbe (38) associée reste constant ou quasiment constant dans la plage allant jusqu'à 20 % de la longueur (Z0), puis diminue, de sorte que le maximum (40") est réalisé sous la forme d'un plateau.

11. Roue de turbine selon l'une quelconque des revendications 2 à 9, dans laquelle, le long du bord extérieur (28) de la pale (12), l'angle (T) de la courbe (38) associée présente le maximum (40") dans la zone inférieure à 5 % de la longueur (Z0).

12. Dispositif de suralimentation à turbine à géométrie variable pour moteur à combustion interne, comprenant une roue de turbine (10) selon l'une quelconque des revendications 1 à 11.
